# EUROPÄISCHE PATENTSCHRIFT

(11) **EP 0 530 872 B1**
(45) Veröffentlichungstag und Bekanntmachung des Hinweises auf die Patenterteilung: **23.08.1995**
(21) Anmeldenummer: 92202357.7
(22) Anmeldetag: 30.07.1992
(51) Int. Cl.: C25B 1/00, C01G 23/00

(54) **Verfahren zur Herstellung einer Titan(III)-Sulfatlösung**
Process for producing a titanium III-sulphate solution
Procédé de production d'une solution de sulfate de titane(III)

(30) Priorität: 03.09.1991 DE 4129308
(43) Veröffentlichungstag der Anmeldung: 10.03.1993
(73) Patentinhaber: METALLGESELLSCHAFT Aktiengesellschaft, 60015 Frankfurt (DE)
(72) Erfinder: Hillrichs, Eilhard, Dr., W-6470 Büdingen (DE); Ulrich, Sander, Dr., W-6382 Friedrichsdorf (DE)

(56) Entgegenhaltungen:
- EP-A- 0 291 416
- DE-A- 4 110 617
- CHEMICAL ABSTRACTS, vol. 77 Columbus, Ohio, US; abstract no. 108843, UDUPA,HANDADY V. ET AL. 'Electrolytic reduction of Ti (SO4)2'
- Section Ch, Week 8249, Derwent Publications Ltd., London, GB; Class E32, AN 82-06632J

## Beschreibung

Die Erfindung betrifft ein Verfahren zur Herstellung einer wäßrigen Titan(III)-Sulfatlösung durch elektrolytische Reduktion einer wäßrigen Titan(IV)-Sulfatlösung.

Titan(III)-Verbindungen sind in wäßrigen Lösungen erhältlich durch Reduktion löslicher Titan(IV)-Verbindungen mittels Zink und Säure oder auf elektrolytischem Weg. Die Lösungen enthalten violett gefärbte Titan(III)-lonen, die ein erhebliches Reduktionsvermögen besitzen. Bei der elektrolytischen Reduktion einer schwefelsauren Lösung von Titan(IV)-Sulfat erhält man eine violett gefärbte Lösung, aus der sich ein saures Titan(III)-Sulfat der Zusammensetzung 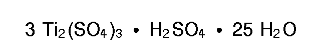 in Form eines violetten, seidig-glänzenden Kristallpulvers gewinnen läßt, das allerdings sauerstoffempfindlich ist. Aus der Veröffentlichung von Schmitz-Dumont, Simons und Broja, Z. anorg. Chem., Band 258, 1949, Seiten 307 bis 322, ist bekannt, daß bei der elektrolytischen Reduktion einer Titan(IV)-Sulfatlösung als Anode ein Platinblech benutzt wurde, das in eine mit 20 %iger Schwefelsäure beschickte Tonzelle eintauchte. 4 amalgamierte Streifen aus Bleiblech, die um die Tonzelle angeordnet waren, tauchten in die Titan-(IV)-Sulfatlösung, in welche die Tonzelle hineinragte. Als Elektrolysiergefäß diente ein niedriger Standzylinder, der durch einen Gummistopfen verschlossen war und Bohrungen zur Aufnahme der Tonzelle und je eines Ein- und Ableitungsrohres zum Hindurchleiten von C0₂ hatte. Bei ständigem Durchleiten von C0₂ und guter Kühlung mit fließendem Wasser wurde bei 24 Volt und einer Stromdichte von 0,06 A/cm² 6 Stunden und darauf die gleiche Zeit bei 0,33 A/cm² elektrolysiert. Nach dieser Zeit war das gesamte Titan(IV)-Sulfat zu Titan(III)-Sulfat reduziert, das allerdings als schwefelsäurehaltiges Hydrat in Form eines feinkristallinen hellvioletten Niederschlags ausfiel. Es hat sich gezeigt, daß das für den Labormaßstab konzipierte bekannte Verfahren im technischen Maßstab nicht praktikabel ist, da zum einen die Stromausbeute außerordentlich niedrig ist und da zum anderen die bei der Elektrolyse erzeugten festen dreiwertigen Titanverbindungen bei ihrer Abtrennung nur unzureichend vor Reoxidation geschützt werden können sowie einer kontinuierlichen Verfahrensführung im Wege stehen, denn sie verursachen Verstopfungen in der Elektrolyseapparatur.

In der IN-125 653 wird ein Verfahren zur elektrolytischen Reduktion von Ti(SO₄)₂zu Ti₂(SO₄)₃ beschrieben, bei dem eine Lösung, die 120 bis 480 g/I Ti(S0₄)₂ und 160 bis 800 g/I schweflige Säure enthält, in einer geteilten Zelle elektrolysiert wird. Diese Zelle besteht aus einer Blei-Anode, einem Diaphragma und einer rotierenden Blei- oder amalgamierten Blei-Kathode. Die Zelle wird mit einer kathodischen Stromdichte von 0,5 bis 10 A/dm² bei einer Temperatur zwischen 25 bis 60 _{°} C und unter einer Inertgasatmosphäre betrieben.

In der SU-A-9 051 999 (Zusammenfassung in Chemical Abstracts, Vol. 97, Abstract No. 14084v) wird die Verbesserung eines Verfahrens zur Herstellung einer Ti₂(SO₄)a-Lösung durch elektrolytische Reduktion von Ti(IV)-lonen in einer H₂S0₄-Lösung beschrieben. Zur Vereinfachung des Prozesses und zur Verminderung des H₂S0₄-Verbrauchs wird Ti0₂, Ti0₂-Hydrat oder Ti(OH)₄ als Ti(IV)-Verbindung in einem H₂S0₄/Ti0₂-Verhältnis von 1 bis 2:1 verwendet. Die Reduktion wird an einer Hg-Elektrode bei einer Temperatur von 60 bis 100°C und unter einer Stromdichte von 0,5 bis 2,5 A/dm² durchgeführt.

In der DE-A-4 110 617 wird ein Verfahren zur Reduktion aromatischer Nitroverbindungen mit Hilfe dreiwertiger Titanverbindungen in einer wäßrigen, sauren Lösung beschrieben, bei dem ein hydrolysestabiles Titan(IV)-Oxy-Salz in saurer, wäßriger Lösung auf elektrochemischem Weg zum entsprechenden Titan(III)-Oxy-Salz reduziert wird und bei dem das so erhaltene Titan(III)-Oxy-Salz mit der aromatischen Nitroverbindung so in Kontakt gebracht wird, daß letztere zumindest teilweise zu einer aromatischen Nitroso- oder Hydroxyl-Aminverbindung oder vollständig zum aromatischen Amin reduziert wird.

In der EP-A-0 291 416 wird eine elektrolytische Zelle zur Reduktion einer Lösung beschrieben, die Titan- und Eisen-Ionen enthält. Die elektrolytische Zelle besteht aus einem Anodenraum, einer Kationenaustauschermembran und einem Kathodenraum, in welchem die Titan- und Eisen-Ionen enthaltene Lösung im Umlauf gehalten wird und worin die Eisen-Ionen reduziert werden.

Der Erfindung liegt die Aufgabe zugrunde, ein Verfahren der eingangs genannten Art zu schaffen, das es ermöglicht, die elektrolytische Reduktion von vierwertigem Titan mit hoher Stromausbeute durchzuführen, das Auskristallisieren fester dreiwertiger Titanverbindungen sowie das Ausfallen von Metatitansäure während der Elektrolyse zu vermeiden und die elektrolytische Reduktion vierwertiger Titanverbindungen kontinuierlich durchführen zu können.

Die der Erfindung zugrundeliegende Aufgabe wird dadurch gelöst, daß als Kathode ein säurestabiles, korrosionsfestes, hochlegiertes Stahlblech, als Anode ein mit Iridium aktiviertes Titanblech oder eine Wasserstoffdiffusionselektrode und anstatt eines Diaphragmas eine Kationenaustauschermembran verwendet werden, daß die elektrolytische Reduktion bei einer Stromdichte von 1 bis 3 kA/m² und einer Temperatur von 50 bis 60 °C durchgeführt wird, daß die wäßrige Titan(IV)-Sulfatlösung eine Titan(IV)-Konzentration, berechnet als Ti0₂, von 80 bis 200 g/I sowie eine Sulfatkonzentration, berechnet als H₂S0₄, von 420 bis 500 g/I hat und daß aus dem Kathodenraum eine Titan(III)-Sulfat enthaltende Lösung entnommen wird, in der 50 bis 80 % des gesamten Titangehalts als dreiwertiges Titan vorliegen.

Eine Kathode, die aus einem säurestabilen, korrosionsfesten, hochlegierten Stahlblech besteht, hat eine lange Lebensdauer und drängt außerdem eine unerwünschte Nebenreaktion, nämlich die reduktive Bildung von Wasserstoff, zurück. Die mit Iridium aktivierte Anode besteht aus einem Titanblech, das entweder an der Oberfläche mit einer sehr dünnen Iridiumschicht versehen ist oder das an der Oberfläche eine Ti0₂-Schicht aufweist, die wiederum mit Iridium beschichtet ist. Die mit Iridium aktivierte Titananode hat den Vorteil, daß sie den bei der Elektrolyse entstehenden Sauerstoff problemlos in den Gasraum des Anodenraums abgibt. Die Wasserstoffdiffusionselektrode besteht aus einem Bleiträger, auf den ein Kohlenstofftuch aufgeklebt ist, das ein Gemisch aus Teflon- und Aktivkohlepulver enthält, wobei auf das Aktivkohlepulver Platin, Iridium und/oder Rhodium aufgebracht ist. Auf der Pulverschicht liegt eine für Ionen durchlässige Membran auf, welche die Wasserstoffdiffusionselektrode vom Kathodenraum abschirmt. Die Pulverschicht wird mit Wasserstoff durchspült. Über die Membran treten OH--Ionen in die Pulverschicht ein, werden entladen und bilden mit dem dort vorhandenen Wasserstoff Wasser, wodurch die für die Abscheidung des Sauerstoffs erforderliche Überspannung vermieden wird. Die Wasserstoffdiffusionselektrode ist besonders für den Einsatz bei niedrigen Stromstärken geeignet. Die Verwendung einer Kationenaustauschermembran hat gegenüber den bekannten Tondiaphragmen den Vorteil, daß sie in Richtung des Kathodenraums für Anionen nahezu quantitativ undurchlässig ist. Durch die Einhaltung der Ti0₂- und Sulfat-Konzentrationen wird in überraschender Weise erreicht, daß weder feste Sulfate des dreiwertigen Titans, noch Metatitansäure ausfallen. Dies ermöglicht es, die Elektrolyse auch kontinuierlich durchzuführen, was für einen technischen Prozeß ein ganz erheblicher Vorteil ist. Ferner ist die aus dem Kathodenraum abgeführte Lösung, in der erfindungsgemäß 50 bis 80 % des gesamten Titans in dreiwertiger Form vorliegen, für viele Verwendungszwecke vorteilhaft einsetzbar, da die wäßrige Lösung vor dem nachteiligen Einfluß des Luftsauerstoffs gut geschützt werden kann. Schließlich wird beim erfindungsgemäßen Verfahren eine Stromausbeute > 90 % erzielt, d.h., daß nur 10 % des zur Elektrolyse verwendeten Stroms nicht der Reduktionsarbeit zugänglich gemacht werden können. Diese hohe Stromausbeute macht die Anwendung der elektrolytischen Reduktion im technischen Maßstab überhaupt erst möglich, wobei durch die Entnahme einer Titan(III)-Sulfat enthaltenden Lösung, in der 50 bis 80 % des gesamten Titangehalts als dreiwertiges Titan vorliegen, in vorteilhafter Weise erreicht wird, daß bei einer Stromausbeute von > 90 % kein festes, kristallines Titan(III)-Sulfat ausfällt. Durch die Einhaltung der erfindungsgemäßen Titan(III)-Konzentration ist also gewährleistet, daß bei kontinuierlicher Verfahrensführung der Elektrolyse keine Verstopfungen der Elektrolysezellen und Rohrleitungen auftreten.

Die nach dem erfindungsgemäßen Verfahren hergestellte Titan(III)-Sulfatlösung kann nach der Erfindung besonders vorteilhaft zur Reduktion von dreiwertigem Eisen bei der Gewinnung von Metatitansäure und Ti0₂ verwendet werden, da das dreiwertige Titan dabei ebenfalls in Metatitansäure bzw. Ti0₂ übergeht. Im Gegensatz zur Orthotitansäure Ti(OH)₄ bezeichnet der Begriff "Metatitansäure" die Verbindungen TiO(OH)₂ und Ti0₂ - aq.

Da im Katholyten eine Schwefelsäurekonzentration vorliegt, die nur das Vorhandensein von Tio²⁺⁻lonen ermöglicht, soll der vorstehend verwendete Begriff "Titan(IV)-" nur für den Begriff "Ti0²⁺" stehen; im erfindungsgemäßen Katholyten liegt das vierwertige Titan nur als Ti0²⁺ vor.

Der Gegenstand der Erfindung wird nachfolgend anhand der Zeichnung und eines Ausführungsbeispiels näher erläutert.

Die Zeichnung zeigt das Fließbild des erfindungsgemäßen Verfahrens. Dem Vorratstank (1) wird über die Leitung (2) kontinuierlich der Katholyt zugeführt, der durch Auflösen von TiOS0₄ in einer verdünnten Schwefelsäure hergestellt wird, was in der Zeichnung nicht dargestellt ist. Der Katholyt enthält neben vierwertigem Titan, das als Ti0²⁺ vorliegt, Sulfat- und Wasserstoffionen sowie Wasser. Aus dem Vorratstank (1) wird die dort vorhandene Flüssigkeit über die Leitung (3) von der Pumpe (4) in den Kathodenraum (5) der Elektrolysezelle (6) gefördert. Die Elektrolysezelle (6) besteht aus dem Gehäuse (7), dem Kathodenraum (5) und dem Anodenraum (8). Diese beiden Räume sind durch die Kationenaustauschermembran (9) getrennt. Im Kathodenraum (5) ist ein als Kathode (10) wirkendes korrosionsfestes Edelstahlblech angeordnet, das als negativer Pol mit Gleichspannung versorgt wird. Aus dem Kathodenraum (5) wird der elektrolysierte Katholyt, der neben den bereits genannten Komponenten dreiwertiges Titan enthält, über die Leitung (11) in den Vorratstank (1) gefördert. Der Leitung (11) wird über die Leitung (12) ein Teilstrom des elektrolysierten Katholyten als Endprodukt entnommen, in dem mehr als 50 % des gesamten Titans als dreiwertiges Titan vorliegen. Am Kopf des Kathodenraums (5) wird der in einer Nebenreaktion gebildete Wasserstoff über die Leitung (13) abgeführt. Die mit dem Endprodukt über die Leitung (12) abgeführten Stoffe werden dem System über die Leitung (2) in Form von neuem Katholyt wieder zugeführt.

Aus dem Vorratstank (14) wird der Anolyt über die Leitung (15) von der Pumpe (16) in den Anodenraum (8) gefördert. Der Anolyt besteht aus einer wäßrigen Schwefelsäure, deren Sulfatkonzentration etwa der des Katholyten entspricht. Im Anodenraum (8) ist ein mit Iridium beschichtetes Titanblech angeordnet, das als Anode (17) wirkt und an den positiven Pol einer Gleichspannungsquelle angeschlossen ist. Während des Stromflusses treten Wasserstoffionen durch die Kationenaustauschermembran (9) in den Kathodenraum (5) ein, während an der Anode (17) OH-Ionen unter Bildung von Sauerstoff und Wasser entladen werden. Der Sauerstoff wird über die Leitung (18) aus dem Anodenraum (8) abgeführt, während das bei der Elektrolyse verbrauchte Wasser dem Vorratstank (14) über die Leitung (19) zugeführt wird. Aus dem Anodenraum (8) wird der elektrolysierte Anolyt über die Leitung (20) in den Vorratstank (14) zurückgeführt. Die Anode (17) besteht aus einem Titanblech, das eine Dicke von 1 bis 4 mm hat und mit einer Iridium enthaltenden Schicht versehen ist, deren Dicke 10 bis 200 um beträgt. Die Iridium enthaltende Schicht wurde nach dem PVD-Verfahren auf das Titanblech aufgebracht.

Im einzelnen laufen beim erfindungsgemäßen Verfahren folgende Bruttogleichungen ab:
Kathodische Reduktion: 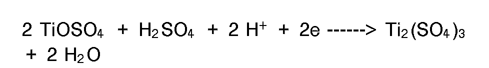 Anodische Oxidation: 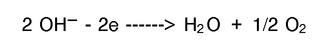
Im Kathodenraum wird nach der Gleichung 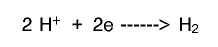 in einer unerwünschten Nebenreaktion Wasserstoff gebildet. Im Katholyten liegen die Verbindungen TiOS0₄, H₂S0₄ und Ti₂(SO₄)₃ zumindest teilweise in dissoziierter Form vor.

In den Vorratstank (1) werden über die Leitung (2) pro Stunde 1323 I neuer Katholyt gefördert, der TiOS0₄ in einer Konzentration von 125 g Ti0₂/1 enthält. Außerdem enthält der neue Katholyt pro I 480 g H₂S0₄. Über die Leitung (12) werden als Endprodukt pro Stunde 1323 I einer Lösung entnommen, die dreiwertiges Titan enthält, das einer Ti0₂-Menge von 75 g/I entspricht. Außerdem enthält das Endprodukt noch vierwertiges Titan, das einer Ti0₂-Menge von 50 g/I entspricht. Schließlich sind im Endprodukt 480 g S0₄/1 enthalten, die teilweise als H₂S0₄ vorliegen. Über die Leitung (13) werden pro Stunde 1,1 m³ Wasserstoff abgeführt, während über die Leitung (18) pro Stunde 6,6 m³ Sauerstoff abfließen. Pro Stunde wird dem Vorratstank (14) über die Leitung (19) ein Liter Wasser zugeführt. Die Elektrolyse wird mit einer Gleichspannungsquelle betrieben, die bei einer Stromstärke von 1,5 kA/m² eine Spannung von 2,2 bis 2,4 Volt hat. Die Stromdichte beträgt also 1,5 kA/m² Kathodenfläche. Die Stromausbeute liegt bei ca. 92 %.

Die nach dem erfindungsgemäßen Verfahren hergestellte Titan(III)-Sulfatlösung kann vorteilhaft zur Reduktion des dreiwertigen Eisens bei der Herstellung von Metatitansäure und Ti0₂ verwendet werden. Um diese beiden Produkte mit hinreichender Reinheit gewinnen und als Weißpigment verwenden zu können, ist es erforderlich, daß die in den Rohstoffen enthaltenen Verunreinigungen, insbesondere das dreiwertige Eisen, während des Herstellungsprozesses so behandelt werden, daß sie bei der Hydrolyse des TiOS0₄ keine gefärbten Fällungsprodukte liefern. Zur Herstellung von Metatitansäure bzw. Ti0₂ werden nämlich mineralische, titanhaltige Rohstoffe mit Schwefelsäure aufgeschlossen, wobei Titanylsulfat entsteht, das insbesondere mit dem Sulfat des dreiwertigen Eisens verunreinigt ist. Die verunreinigte Titanylsulfatlösung wird anschließend hydrolysiert, wobei auch das dreiwertige Eisenhydroxid ausfällt. Um dies zu verhindern, wird der mit dreiwertigem Eisen verunreinigten Titanylsulfatlösung dreiwertiges Titan zugegeben, das das dreiwertige Eisen zu zweiwertigem Eisen reduziert und selbst wieder in die vierwertige Stufe übergeht. Bei der Hydrolyse der so behandelten Titanylsulfatlösung wird lediglich die Metatitansäure ausgefällt, während das zweiwertige Eisen in Lösung bleibt. Die Metatitansäure kann anschließend zu Ti0₂ verarbeitet werden. Die entsprechend dem erfindungsgemäßen Verfahren hergestellte Titan(III)-Sulfatlösung kann auch bei anderen industriellen Reduktionsprozessen als Reduktionsmittel vorteilhaft verwendet werden.

## Patentansprüche

1. Verfahren zur Herstellung einer wäßrigen Titan-(III)-Sulfatlösung durch elektrolytische Reduktion einer wäßrigen Titan(IV)-Sulfatlösung, dadurch gekennzeichnet, daß als Kathode ein säurestabiles, korrosionsfestes, hochlegiertes Stahlblech, als Anode ein mit Iridium aktiviertes Titanblech oder eine Wasserstoffdiffusionselektrode und anstatt eines Diaphragmas eine Kationenaustauschermembran verwendet werden, daß die elektrolytische Reduktion bei einer Stromdichte von 1 bis 3 kA/m² und einer Temperatur von 50 bis 60 ° C durchgeführt wird, daß die wäßrige Titan(IV)-Sulfatlösung eine Titan(IV)-Konzentration, berechnet als Ti0₂, von 80 bis 200 g/I sowie eine Sulfatkonzentration, berechnet als H₂S0₄, von 420 bis 500 g/I hat und daß aus dem Kathodenraum eine Titan(III)-Sulfat enthaltende Lösung entnommen wird, in der 50 bis 80 % des gesamten Titangehalts als dreiwertiges Titan vorliegen.

2. Verwendung des Verfahrens nach Anspruch 1 zur Herstellung einer Titan(III)-Sulfatlösung zur Reduktion des dreiwertigen Eisens bei der Gewinnung von Metatitansäure und Ti0₂.

## Claims

1. A method for the production of an aqueous titanium (III) sulphate solution by electrolytic reduction of an aqueous titanium (IV) sulphate solution, characterised in that an acid-stable, corrosion-resistant, high-alloy steel plate is used as the cathode, a titanium plate activated with iridium or a hydrogen diffusion electrode is used as the anode, and a cation-exchanger membrane is used instead of a diaphragm, that the electrolytic reduction is effected at a current density of 1 to 3 kA/m² and a temperature of 50 to 60 ° C, that the aqueous titanium (IV) sulphate solution has a titanium (IV) concentration, calculated as Ti0₂, of 80 to 200 g/I and a sulphate concentration, calculated as H₂S0₄, of 420 to 500 g/I, and that a solution containing titanium (III) sulphate is removed from the cathode compartment, in which solution 50 to 80% of the total titanium content is present as trivalent titanium.

2. The use of the method according to Claim 1 for the production of a titanium (III) sulphate solution for the reduction of trivalent iron in the recovery of metatitanic acid and Ti0₂.

## Revendications

1. Procédé pour préparer une solution aqueuse de sulfate de titane(III) par réduction électrolytique d'une solution aqueuse de sulfate de titane(IV), caractérisé en ce que l'on utilise comme cathode une tôle d'acier hautement alliée, anticorrosion, stable aux acides, comme anode une tôle de titane activée à l'iridium ou une électrode à diffusion d'hydrogène, et au lieu d'un diaphragme une membrane échangeuse de cations ; que la réduction électrolytique est mise en oeuvre avec une densité de courant de 1 à 3 kA/m² et à une température de 50 à 60 C ; que, dans la solution aqueuse de sulfate de titane(IV), la concentration du titane(IV), calculée en Ti0₂, est de 80 à 200 g/I, et la concentration du sulfate, calculée en H₂S0₄, est de 420 à 500 g/I ; et que l'on soutire du compartiment cathodi-que une solution contenant du sulfate de titane(III), dans laquelle 50 à 80 % de la totalité du titane sont présents sous forme de titane trivalent.

2. Utilisation du procédé selon la revendication 1 pour préparer une solution de sulfate de titane-(III) destinée à la réduction du fer trivalent lors de la préparation de l'acide métatitanique et du Ti0₂.
